Europäisches Patentamt

European Patent Office

Office européen des brevets

(19)

(11) Veröffentlichungsnummer: **0 025 960**

**A2**

(12) ## EUROPÄISCHE PATENTANMELDUNG

(21) Anmeldenummer: **80105508.8**

(22) Anmeldetag: **13.09.80**

(51) Int. Cl.³: **B 62 M 13/04**
**B 62 K 17/00**

(30) Priorität: **24.09.79 DE 2938605**

(43) Veröffentlichungstag der Anmeldung:
**01.04.81 Patentblatt 81/13**

(84) Benannte Vertragsstaaten:
**BE CH DE FR GB LI LU NL SE**

(71) Anmelder: **Schach, Alfred, Dr.**
**Obrigheimerstrasse 16**
**D-6951 Obrigheim- Mörtelstein(DE)**

(72) Erfinder: **Schach, Alfred, Dr.**
**Obrigheimerstrasse 16**
**D-6951 Obrigheim- Mörtelstein(DE)**

(54) **Motorroller.**

(57) Motorroller als motorisierter Sitzroller für Erwachsene mit Reibradantrieb für den Straßenverkehr.

Fig.1

EP 0 025 960 A2

Motorroller

Patentbeschreibung:

Die Aufgabe meines Patentbegehrens ist die Weiterentwicklung eines bekannten Tretrollers zu einem vollwertigen, motorgetriebenen Verkehrsfahrzeug mit allen notwendigen Merkmalen wie Aufsitzmöglichkeit, Lenkung, uneingeschränkte Antriebs- und Bremsbedienung, wie diese für die Zulassung im öffentlichen Verkehr erforderlich sind.

Durch die Überführung des Tretrollers vom Kinderspielzeug, das der körperlichen Bewegung und sportlichen Betätigung der Jugend dient, zu einem motorgetriebenen Verkehrsfahrzeug für jedermann kommen dem Erfindungsgegenstand eine völlig neue Funktion und zusätzliche Dimensionen zu:

Die stehend-tretende Fortbewegung wird durch das motorisierte Fahren, das nur im Sitzen optimal ist, ersetzt; aus dem Tretroller wird der motorisierte Sitzroller;
Die sportliche Komponente des Tretrollers entfällt;
Es erweitert sich der Kreis der Benutzer auf jung und alt;
Der Motorroller ist als Gebrauchsgegenstand für den täglichen und dauerhaften Einsatz im Verkehr bestimmt;

Als technisches Hilfsmittel muß er den Verbrauchern Erleichterungen, Zeit- und Kostenersparnisse einbringen und größtmögliche Sicherheit im Gebrauch gewährleisten, sei es den Berufstätigen, dem Schüler, der Hausfrau, die anstelle zu Fuß zu gehen, die Nahverkehrsmittel oder das Auto zu benutzen, dem Gedränge auf überfüllten Straßen und der Parknot in den Städten entgehen wollen.

Es kommt ein wesentlicher Faktor hinzu: Das platz- und spritsparende, selbstfahrende Solo-Kleinstfahrzeug ermöglicht es auch älteren und gebrechlichen Menschen, motorisiert zu sein wegen seiner besonderen Fahr-, Kipp- und Balancesicherheit. Sie beruht ganz einfach darauf, daß während der Fahrt die beiden Füße des Fahrers nur wenige Zentimeter über dem Boden auf dem Trittbrett des Motorrollers placiert sind. Der Fahrer befindet sich während der Fahrt in ruhiger, sitzender Haltung ohne körperliche Beanspruchung durch Pedaltretbewegungen, er hält sich mit beiden Händen an den Griffen der Lenkstange fest, um durch die Gas- und Bremshebelbedienung die Fahrweise und Geschwindigkeit zu regulieren. Wichtig ist ferner, daß durch Abheben des Absatzes "der Leerlauf" eintritt und das Anhalten durch Herausstellen der beiden Beine auf den Boden im Sitzen erfolgen kann.

Die Erfindung, als motorisiertes Straßenfahrzeug für jedermann, erinnert in der Formgebung zwar an einen Tretroller, ist aber im Prinzip ein völlig neuartiges Kleinfahrzeug mit ungewöhnlichen Qualitäten. Der geringe Raumbedarf sowohl im Verkehr als auch zum Abstellen, der geringe Kraftstoffverbrauch und vor allem die einfache Bedienungsmöglichkeit empfehlen es als Stadtfahrzeug, auch für ältere Personen. Die geringen Gestehungskosten machen es außerdem zu einem Gebrauchsfahrzeug ähnlich einem Fahrrad aber mit erheblich größerer Bequemlichkeit und einem höheren Nutzeffekt.

Solche Fahrzeuge sind mittlerweile, vor allem für den Großstadtverkehr, dringende Notwendigkeit geworden. Es wurde deshalb vielfach versucht, solche Konstruktionen zur Verfügung zu stellen. Es sind Fahrräder mit Hilfsmotor für Vorder- und Hinterradantrieb bekannt geworden. Es wurden Tretroller mit Motortrieb gezeigt. In den meisten Fällen wird ein Rad mittels Reibrolle durch einen kleinen Zweitaktmotor mit Reduziergetriebe angetrieben. Ketten-, Kardan- und ähnliche Übertragungsmöglichkeiten von Drehmomenten wurden durch den unkomplizierten und vor allem kostensparend herstellbaren Reibrollenantrieb verdrängt.

Hierbei ist ein kompletter Motor mit Getriebe über einen am Fahrzeugrahmen vorgesehenen Bolzen abkippbar gelagert. Die vorzugsweise gummierte Antriebsrolle liegt auf dem zugeordneten Radprofil auf, wobei der Durchmesser der Rolle erheblich kleiner als der des Rades ist. Es handelt sich in jedem Falle um einen Reibantrieb, dessen Andruck durch das Eigengewicht von Motor und Getriebe gegeben ist und in besonderen Ausführungen durch Federkraft verstärkt wird. Mittels teilweise recht komplizierter Schalteinrichtungen ist der in der beschriebenen Art wirksame Dauerantrieb unterbrechbar. Die Bedienung solcher Hebelwerke, die manuell erfolgen muß, beeinträchtigen, wenn im Fahren überhaupt möglich, durch Wegnahme einer Hand von der Lenkstange die Fahrsicherheit.

Der erfindungsgemäße Motorroller, auch mit einem motorbetriebenem Reibrollenantrieb ausgestattet, ist auf Grund seiner einfachen und sinnfälligen
Antriebsbedienung und Handhabung sowie der Anordnung einer unumgänglichen
Sitzmöglichkeit ein brauchbares Nahverkehrsfahrzeug. Die Fußbedienung des
Antriebes und der tiefgehaltene Schwerpunkt des Sitzens ergeben ein besonders sicheres Fahren. Die sitzende und in keiner Weise strapazierende
Körperhaltung während der Fahrt sind dadurch gewährleistet, daß die Füße
des Fahrers nur wenige Zentimeter über dem Boden auf dem Trittbrett ruhen.
Durch Auftreten mit dem Absatz eines Fußes auf das hierfür lage- und
dimensionsgemäß zugepaßte Pedal wird der Antrieb eingeschaltet und mit
Pedalentlastung der Leerlauf bewerkstelligt. Die Hände stützen sich auf die
Handgriffe der Lenkstange ab und regulieren durch Betätigung eines Gasdrehschiebers und eines Bremshebels die Fahrweise und die Geschwindigkeit.
Der Fahrer kann sich auf Grund dieser einfachen Bedienungsweise ablenkungsfrei auf den Verkehr konzentrieren, sodaß die Beherrschung des Fahrzeuges zumal
bei der niederen Maximalgeschwindigkeit von ca. 25 km/h spielend leicht ist.

Das Antriebsaggregat ist in bekannter Weise über eine am Rahmen vorgesehene
Welle über dem Hinterrad abkippbar angeordnet. Dabei ist es aber mit der
Antriebsrolle freischwebend über dem zugeordneten Rad an einer Feder aufgehangen. Ein am Motorgehäuse kraftschlüssig befestigter und parallel im
geringen Abstand über dem Trittbrett angeordneter Hebel ermöglicht den
Andruck der Antriebsrolle gegen die Peripherie des Hinterrades. Dies erfolgt
durch Niedertreten des dem Hebel endseits angeformten Pedals mit dem Absatz
eines auf dem Trittbrett ruhenden Fußes. Die Anordnung eines langen Betätigungshebels ermöglicht die Überwindung der Federkraft und damit die Einschaltung des Antriebes mit geringer Kraft. Die aus den vorerwähnten
Sicherheitsgründen zu begrenzende Absatz- bzw. Fußbewegung wird durch
Beschränkung des Hebelweges gewährleistet. Hierzu dient der Anschlag eines
ebenfalls am Motorgehäuse befestigten Stabes gegen einen zugeordneten
Bolzen am Rollerrahmen. Die Fahrfunktion ist unabhängig von der Anzahl der
Hinterräder. Sie erfolgt in jedem Falle in der geschilderten Weise durch
Niederdrücken des Pedals und dem damit gegebenen Andruck vorzugsweise einer
Rolle gegen eines der Räder. Die in dieser Art gebildete Reibkupplung wird
durch den dem Reifenprofil zugeformten Gummi- oder gummiähnlichen Kunststoffmantel der Antriebsrolle wahlweise durch Noppen auf deren Oberfläche verstärkt.

Eine über das oder die Hinterräder mit dem Rahmen hochklappbar verbundene Verkleidung dient gleichzeitig als Sitz und als Ummantelung der kompletten Antriebsteile. Sie schützt den Fahrer vor Schmutz und bietet gleichzeitig einen bequemen Sitz. Sie ist über eine vorderseitige Welle hochklappbar, liegt rückseitig in eine zugeordnete Aufnahme am Rollerrahmen ein und ist mittels eines handelsüblich bekannten Spannverschlusses befestigt. Zur Verbesserung der Sitzqualität ist der Haubenrücken mit einem Polster ausgestattet und die Aufnahme am Rahmen ist gefedert aufgehangen.

In vereinfachter Bauweise kann der Motorroller anstatt mit dem Haubensitz mit einem handelsüblich bekannten Sattel und Gepäckträger ausgerüstet sein.

Nach den Zeichnungen ist der erfindungsgemäße Motorroller beispielhaft beschrieben:

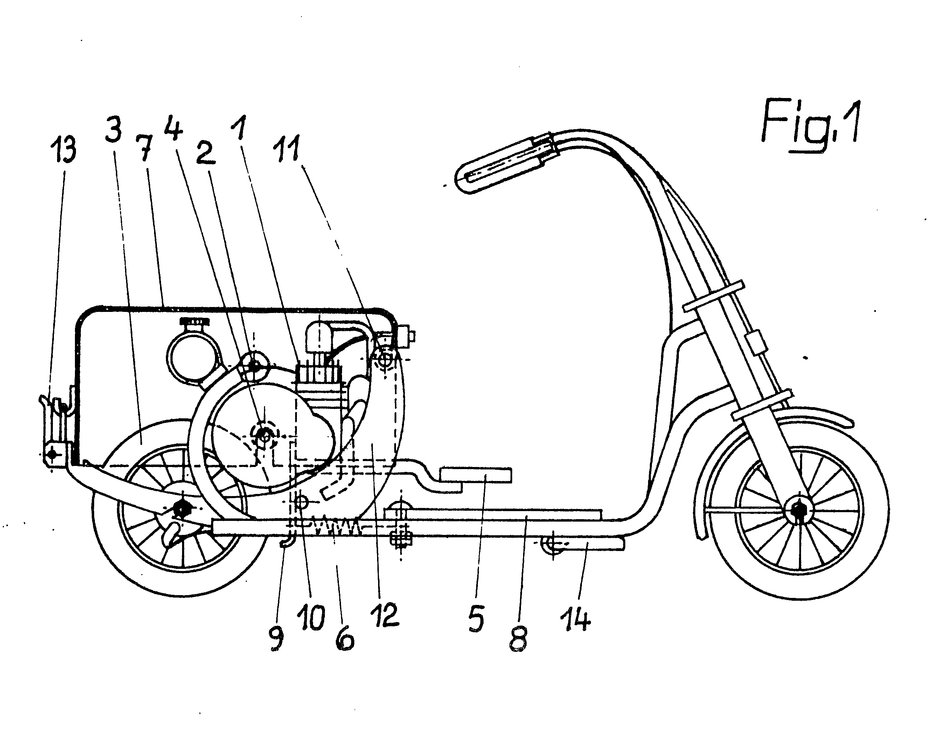

Fig. 1 ist die Seitenansicht eines Motorrollers mit mittig geschnittener Haube.

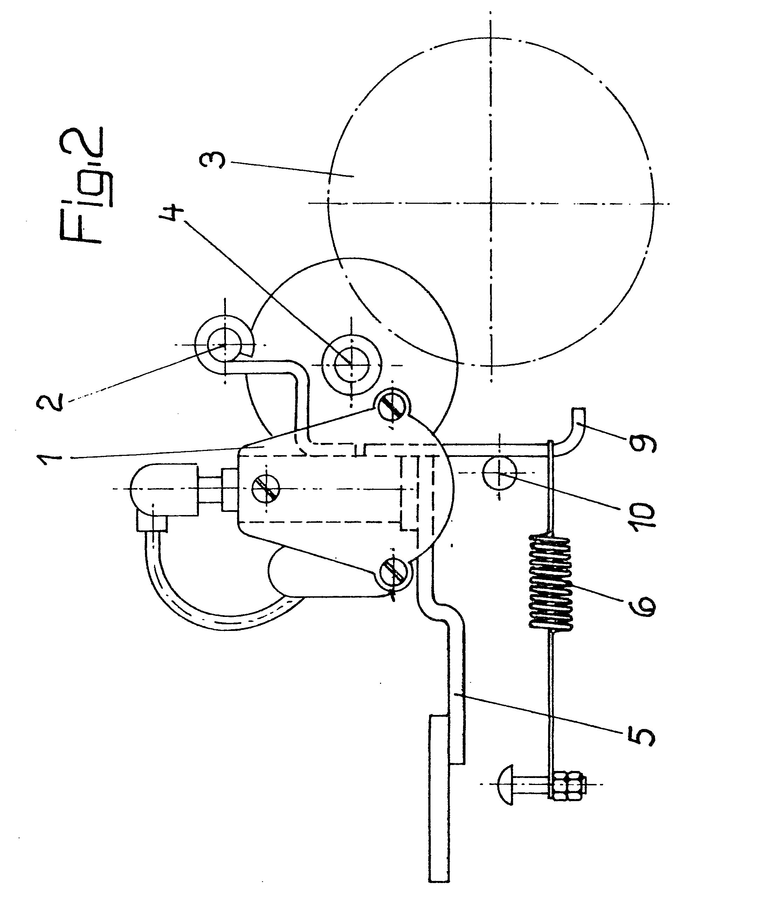

Fig. 2 ist eine im vergrößerten Maßstab gezeigte Seitenansicht der Gegenseite der Fig. 1 und des aus dem Rahmen ausgebauten Motors ohne Vergaser und mit strichpunktierten Andeutungen wichtiger Funktionsteile.

Der Motor 1, vorzugsweise ein Zweitaktmotor für Gemischtreibstoff mit Vergaser, Zündeinrichtung und einem nicht regulierbaren Eingangreduziergetriebe, ist über eine zwischen zwei Parallelflansche 12 des Rahmenrückteiles vorgesehene Welle 2 abkippbar gelagert. Der am Motor- oder Getriebegehäuse angeordnete und nach unten ragende Stab 9 liegt unter dem Zug der Feder 6 gegen den ebenfalls zwischen den Rahmenflanschen 12 vorgesehenen Bolzen 1o an. Die Antriebsrolle 4 wird dadurch in einer über dem Hinterreifen 3 freischwebenden Lage und der Antrieb im Leerlauf gehalten.

Durch Niederdrücken des Pedals 5, das endseits des/in geringem Abstand und parallel zum Trittbrett 8 angeordneten und ebenfalls am Motor- oder Getriebegehäuse befestigten Betätigungshebels angeformt ist, wird die Antriebsrolle 4 entgegen der Federkraft 6 gegen die Peripherie des Hinterreifens 3 gepreßt und die Fahrbereitschaft des Motorrollers hergestellt. Die Feder 6 ist vorzugsweise als Zugfeder unter dem Trittbrett 8 und parallel zu diesem angeordnet. Mit erheblicher Vorspannung zieht sie den bereits erwähnten Anschlagstab 9 gegen den zugeordneten Bolzen 1o.

Zwecks exakter Übertragung des Drehmomentes vom Motor auf den Reifen, das heißt zur Erzeugung einer genügenden Reibung zwischen Reibrolle 4 und Radreifen 3 ist die Rolle 4 aus Gummi oder einem gummiähnlichen Kunststoff vorgesehen und die Rollenform dem Profil der Reifen zugepaßt. Innenseitig ist die Rolle 4 außerdem mit Noppen versehen oder verrippt.

Zur Gewährleistung der geforderten günstigen Bedienungs- und Fahreigenschaften ist das Trittbrett 8 in einer Breite gestaltet, die das bequeme Aufsetzen beider Füße gestattet und das Niederdrücken des Pedals und damit des einseitig und seitlich abgekröpften Betätigungshebels mit dem Absatz eines Fußes sowohl in sitzender als auch in stehender Fahrweise ermöglicht. Letztere ist auf Grund der Bauweise des Motorrollers möglich und beim Anfahren im Tretrollerprinzip unvermeidlich.

Die Pedalbetätigung ersetzt also das Kuppeln und Gängeschalten. Ohne Niederdrücken des Pedals 5 läuft der Motor im Leerlauf. Außer dem Pedal 5 ist nur noch der Gasdrehschieber zur Regulierung der Fahrgeschwindigkeit und der Bremshebel zu bedienen. Beide sind in bekannter Weise an der Lenkstange vorgesehen und mit den in den Rahmenrohren geschützt geführten Bowdenzügen mit den zugeordneten Funktionselementen verbunden. Der Unterbrecher zum Abschalten des Motors befindet sich vorzugsweise gut greifbar als Drucktaste auf der Vorderwand der Haube 7 unmittelbar unter dem Hochklappgelenk. Der Benzinabstellhahn am Tank und der Tupfer des Vergasers sind durch seitliche Haubenausschnitte gut greifbar.

Die Haube 7 ist kastenartig über das oder die Hinterräder und damit über das Antriebsaggregat mit allen Teilen, wie dem kompletten Motor 1, dem Getriebe und dem Tank gestülpt. Mittels eines vorderseitigen Auges ist sie über einen zwischen den Rahmenflanschen 12 vorgesehenen Bolzen 11 hochklappbar aufgehangen. Unterhalb des Auges ist die Haube 7 zwecks ungehinderter Frischluftzufuhr zur Motorkühlung ausgeschnitten. Mit der Rückwandunterkante liegt sie in eine zugepaßte Aufnahme der Rahmenflansche 12 ein und ist mittels eines handelsüblich in mancherlei Ausführungen bekannten Federspannverschlusses 13 befestigt. Die Oberfläche der vorzugsweise aus Leichtmetallblech geformten Haube 7 ist als Sitz vorgesehen. Sie erhält ein Polster oder einen allgemein bekannten Motorradsattel als Auflage.

Mit einer gefederten Aufhängung der Haubenaufnahme ist die Sitzgestaltung stoßfrei und sehr bequem.

Zum Tanken muß die Haube hochgeklappt werden. Zwecks günstiger und den Fahrer nicht belästigenden Ableitung der Abgase ist der unter der Haube liegende Auspuff parallel zu den Haubenseitenwänden und nach unten gerichtet. Die Fahrbereitschaft des Motorrollers wird durch Seilanwurf des Motors 1 oder durch Anschieben im Tretrollerverfahren bei gleichzeitigem Niederdrücken bzw. Aufstellen auf das Pedal 5 hergestellt. Zur Ermöglichung des Seilanwurfs durchtritt die Seilrolle die Haube 7. Letztere ist zu diesem Zweck in der Breite der Seilrolle und bis zu deren Höhe geschlitzt. Die Seilrolle ist auf der einseitigen Verlängerung der Antriebsrollenachse vorgesehen.

Hinter dem Sitzpolster oder Sattel ist auf der Haube 7 ein Gepäckträger angeordnet. Bei Verwendung von zwei Hinterrädern ist der Motorroller standfest. Im Zweiradprinzip ermöglicht eine handelsüblich erhältliche, gefedert abklappbare Parkstütze 14 das Abstellen.

Die nach den Zeichnungen getätigte Beschreibung des erfindungsgemäßen Motorrollers ist natürlich nur eine beispielhafte. In Abwandlung der hier angesprochenen Konstruktion kann als Antrieb anstatt eines Verbrennungsmotors auch ein Elektromotor mit Batterie und Aufladegerät verwendet werden, sodaß anstelle des Auftankens ein Aufladen über eine Steckdose tritt. Zur Übertragung des Drehmomentes vom Motor auf das Hinterrad kann für die Reibkupplung eine Zahnkranzverbindung angeordnet sein. Außerdem kann die in der Beschreibung auf die Haube und hinter den Sitz gelegte Gepäckablage auch hinter und sogar unter der Haube vorgesehen und bei letzterer Montageart sogar diebstahlsicher verschlossen sein. Zur Sicherung des geparkten Motorrollers ist ein Sicherheitsschloß am Haubenverschluß und anstatt des Unterbrechers ein Zündschloß recht gut denkbar. Außerdem kann als Sitzgelegenheit anstelle des aufwendigeren Haubensitzes ein handelsüblicher Fahrrad- oder Motorradsattel angeordnet sein.

Die vielgestaltige Ausstattungsmöglichkeit des erfindungsgemäßen Motorrollers ist eine Voraussetzung zur Verwendungsmöglichkeit für alle Bevölkerungsschichten. Die Ausführung reicht von der einfachen Standardausrüstung mit Fahrrad- oder Motorradsattel bis zur Bauweise mit gehobenen Ansprüchen, zum

- 7 -

Beispiel mit verschließbarer Haube und ähnlichem. Das motorisierte Stadtfahrzeug für Jedermann ist der beschriebene Motorroller jedoch erst auf Grund
seiner Sitzmöglichkeit und der einfachen Bedienungs-, gefahrlosen Fahr- und
günstigen Parkeigenschaften.

Patentansprüche

1. Motorroller, wahlweise mit einem oder zwei Hinterrädern, vorzugsweise
für den Stadtverkehr und mit einem Sattel oder einer als Sitz dienenden
Haube, die ein über eine Welle abkippbares Antriebsaggregat abdeckt,
dessen Antriebsrolle als Reibrad dem Profil eines Hinterrades zugeordnet
ist, d a d u r c h  g e k e n n z e i c h n e t ,  daß die über dem
oder den Hinterrädern (3) frei schwebende Antriebsrolle (4) mit dem
Pedal (5) und entgegen der Kraft der den Motor komplett (1) und Getriebe
tragenden Feder (6), bei gleichzeitigem Abhub des Stabes (8) vom Bolzen
(1o) gegen die Peripherie des oder der Hinterräder (3) angedrückt wird.

2. Motorroller nach Anspruch 1, dadurch gekennzeichnet, daß das Pedal (5)
endseits einem Hebel angeformt ist, der mit dem Antriebsaggregat kraftschlüssig verbunden und im geringen Abstand parallel über dem Trittbrett
(8) angeordnet ist.

3. Motorroller nach Anspruch 1 und 2, dadurch gekennzeichnet, daß der
Pedalhebel (5) nach einer Seite des zum Aufsetzen von zwei Füßen Raum
gebenden Trittbrettes (8) abgekröpft ist.

4. Motorroller nach Anspruch 1 und folgende, dadurch gekennzeichnet, daß
der Motor komplett (1), Getriebe und Tank mittels einer Haube (7)
abgedeckt sind, deren Oberfläche als Sitz gestaltet ist und über ein
vorderseitiges dem Bolzen (11) zugepaßtes Auge hochklappbar, rückwandig
in eine zugeformte, vorzugsweise gefederte am Rahmenflansch (12)
aufgehangene Aufnahme einliegt und mittels eines handelsüblich bekannten
Spannverschlusses befestigt ist.

5. Motorroller nach Anspruch 1 und folgende, dadurch gekennzeichnet, daß
der in bekannter Weise in Tretrollerform vorgesehene mit einem verhältnismäßig breiten Trittbrett (8) ausgestattete Rohrrahmen hintenseitig
mittels zweier Parallelflanschen (12) verstärkt ist, die durch die
Hinterachse und mehrere Bolzen oder Wellen (2, 1o, 11) auf Abstand
gehalten sind.

6. Motorroller nach Anspruch 1 und folgende, dadurch gekennzeichnet, daß die Antriebsrolle (4) aus Gummi oder einem gummiähnlichen Kunststoff vorgesehen ist und innenseitig gerippt oder mit Noppen versehen ist.

7. Motorroller nach Anspruch 1 und folgende, dadurch gekennzeichnet, daß die zweiräderige Ausführung mit einer handelsüblichen, gefedert abklappbaren Parkstütze (14) ausgerüstet ist.

Fig.1

13  3  7  4  2  1  11

9  10  6  12  5  8  14

-1/2-

0025960

Fig.2